# EUROPÄISCHE PATENTSCHRIFT

(11) **EP 1 062 126 B1**
(45) Veröffentlichungstag und Bekanntmachung des Hinweises auf die Patenterteilung: **26.04.2006**
(21) Anmeldenummer: 99916784.4
(22) Anmeldetag: 05.03.1999
(51) Int. Cl.: B60R 21/16

(54) **AIRBAGMODUL, INSBESONDERE BEIFAHRERAIRBAGMODUL**
AIRBAG MODULE, ESPECIALLY PASSENGER AIRBAG MODULE
MODULE D'AIRBAG, NOTAMMENT MODULE D'AIRBAG POUR PASSAGER AVANT

(30) Priorität: 09.03.1998 DE 29804611 U
(43) Veröffentlichungstag der Anmeldung: 27.12.2000
(73) Patentinhaber: Takata-Petri AG, 63743 Aschaffenburg (DE)
(72) Erfinder: ORTMANN, Sven, D-15370 Fredersdorf (DE)
(74) Vertreter: Baumgärtel, Gunnar
(86) Internationale Anmeldenummer: PCT/DE1999/000684
(87) Internationale Veröffentlichungsnummer: WO 1999/046149

(56) Entgegenhaltungen:
- DE-A- 19 521 071
- US-A- 5 529 340
- US-A- 5 632 506
- PATENT ABSTRACTS OF JAPAN vol. 016, no. 405 (M-1301), 26. August 1992 (1992-08-26) & JP 04 135940 A (ASAHI CHEM IND CO LTD), 11. Mai 1992 (1992-05-11)

## Beschreibung

Die Erfindung betrifft ein Airbagmodul, insbesondere ein Beifahrerairbagmodul, nach dem Oberbegriff des Anspruchs 1.

Es sind Airbagmodule mit Gassäcken bekannt, die aus einem einzigen ebenen Zuschnitt hergestellt sind. So ist in der WO 94/10008 ein Gassack beschrieben, der aus einem Zuschnitt besteht, der einen rechteckigen Abschnitt aufweist. Diesem schließen sich an gegenüberliegenden Seiten trapezförmige Abschnitte gleicher Größe und diesen kleinere rechteckförmige Abschnitte an. Diese letztgenannten sind für die Verbindung des Gassacks mit einem Rohrgasgenerator bestimmt. Bei der Herstellung des Gassacks wird ein Teil des Zuschnitts zunächst um eine Mittellinie geklappt, so daß identische Teile aufeinanderliegen. Anschließend werden die schrägen Seitenkanten des trapezförmigen Abschnitts miteinander vernäht. Danach werden das Ober- und Unterteil senkrecht zur Ausbreitungsebene des Gassackzuschnitts voneinander weggezogen und die Ränder der sich dabei neu bildenden gegenüberliegenden, senkrecht zur Ausbreitungsebene verlaufenden Flächen werden miteinander vernäht. Der Rohrgasgenerator wird derart zwischen den für seine Befestigung vorgesehenen Gassackabschnitten positioniert, daß dessen Längsachse parallel zur Ausbreitungsebene des Gassackzuschnitts verläuft.

Der Gassack wird im Kraftfahrzeug so eingebaut, daß Nähte im seitlichen Bereich des Gassacks verlaufen, so daß der Insasse im Kopf- und Thoraxbereich mit diesen nicht in Berührung kommt. Das ist erwünscht, da beim Aufprall des Insassen auf eine Naht eine erhöhte Verletzungsgefahr besteht.

Dieselbe Wirkung wird mit einem aus der DE 295 10 775 U1 bekannten Airbagmodul erzielt, das einen Gassack aufweist, der aus einem einzigen ebenen Zuschnitt hergestellt ist, der beidseitig einer Symmetrielinie je einen Gassackabschnitt gleicher Form und Größe aufweist. Ferner ist der eine Einblasöffnung aufweisende Gassack derart im Airbagmodul angeordnet, daß die Verbindungsnaht der Ränder der Gassackabschnitte nach Entfaltung des Gassacks im Crashfall entlang einer annähernd senkrechten Ebene, ausgehend von einem nahtlosen Bereich des Gassacks, vom Insassen weg verläuft.

Die bekannten Airbagmodule weisen den Nachteil auf, daß es nicht möglich ist, deren einteilige Gassäcke in einem Arbeitsgang zu vernähen, da die Zuordnung der Gassackabschnitte zwischen den Nähvorgängen verändert werden muß.

Der Erfindung liegt daher die Aufgabe zugrunde, einen einteiligen Gassack mindestens gleicher Schutzwirkung einfacher herzustellen.

Erfindungsgemäß wird diese Aufgabe mit den Merkmalen des Anspruchs 1 gelöst.

Bei einem erfindungsgemäßen Airbagmodul, insbesondere einem Beifahrerairbagmodul, ist ein Gassack vorgesehen, der aus einem einzigen ebenen Zuschnitt hergestellt ist, der beidseitig einer Symmetrielinie je einen Gassackabschnitt gleicher Form und Größe aufweist. Der Gassack ist im Airbagmodul derart angeordnet, daß die Verbindungsnaht der Ränder der Gassackabschnitte nach Entfaltung des Gassacks im Crashfall entlang einer zumindest annähernd senkrechten Ebene, ausgehend von einem nahtlosen Bereich des Gassacks, vom Insassen weg verläuft, und daß der in seiner Länge durch die Symmetrielinie bestimmte nahtlose Bereich des Gassacks dem Insassen zugekehrt ist. Des weiteren ist der Gassack nur einmal entlang einer Symmetrielinie gefaltet. Jedem Gassackabschnitt schließt sich ein weiterer Abschnitt zur Bildung einer Aufnahme eines Diffusors an.

Diese Anordnung weist den Vorteil auf, daß der einteilige Gassackzuschnitt nach dem Umklappen um die Symmetrielinie, wodurch dann gleich große Teile übereinander liegen, an seinen Rändern in einem Arbeitsgang zu einem Gassack genäht werden kann, d.h. ohne daß der Gassack zwischendurch in eine andere Lage geklappt werden muß. In Versuchen wurde als weiterer Vorteil ermittelt, daß sich dieser in erfindungsgemäßer Weise im Airbagmodul angeordnete zweidimensionale Gassack im Crashfall wie ein wesentlich aufwendigerer dreidimensionaler Gassack entfaltet.

Auch bei diesem Airbagmodul ist gewährleistet, daß der Kopf- und weitestgehend auch der Thoraxbereich des Insassen auf den nahtlosen Bereich des entfalteten Gassacks auftreffen.

Als Gasgenerator ist bevorzugt ein Rohrgasgenerator im Airbagmodul vorgesehen, wobei der Diffusor, der den Rohrgasgenerator umgibt, so angeordnet ist, daß seine Längsachse senkrecht bezüglich der Ebene verläuft, in der der Gassack bei der Herstellung ausgebreitet ist.

In einer bevorzugten Ausführungsform ist der Abschnitt zur Bildung einer Aufnahme für den Diffusor in dem in eingebauter Lage oben liegenden Bereich des Gassacks vorgesehen. Diese Ausführungsform ist für eine "top mounted"-Einbaulage des Airbagmoduls zweckmäßig. Dadurch wird erreicht, daß sich der Gassack bei der Entfaltung in geringerem Maße in Richtung der Windschutzscheibe erstreckt als in Richtung des Insassen.

In einer weiteren Ausgestaltung ist vorgesehen, daß die Ränder des Gassacks bogenförmig verlaufen.

Die Erfindung soll in einem Ausführungsbeispiel anhand von Zeichnungen näher erläutert werden. Es zeigen:
- Fig. 1: einen einteiligen Gassackzuschnitt für ein Beifahrerairbagmodul;
- Fig. 2: einen aus dem Gassackzuschnitt der Fig.1 gefertigten Gassack nach dem Wenden;
- Fig. 3: den Gassack nach Fig. 2 im Schnitt;
- Fig. 4: einen bekannten dreidimensionalen Gassack eines Beifahrerairbagmoduls in entfalteter Lage im Kraftfahrzeug;
- Fig. 5: den Gassack nach Fig. 4 im Schnitt in verkleinerter Darstellung;
- Fig. 6: den erfindungsgemäß ausgebildeten und angeordneten Gassack eines Beifahrerairbagmoduls in entfalteter Lage im Kraftfahrzeug;
- Fig. 7: den Gassack nach Fig. 6 im Schnitt in verkleinerter Darstellung.

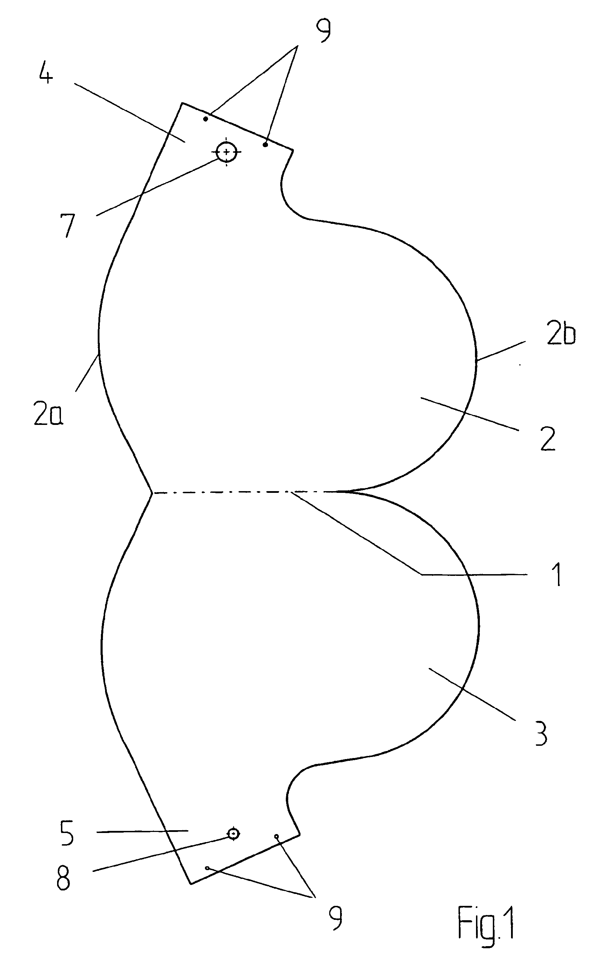

Der einteilige Gassackzuschnitt weist beidseitig einer Symmetrielinie 1 Gassackabschnitte 2, 3 und Abschnitte 4, 5 für die Aufnahme eines Diffusors 6 auf, der sich um einen Rohrgasgenerator herum erstreckt. Für die Aufnahme des Diffusors 6 sind Öffnungen 7, 8 vorgesehen und für dessen Befestigung Öffnungen 9. Aus der Fig. 1 ist ersichtlich, daß die Ränder bogenförmig verlaufen, wobei der Rand 2a, der nach dem Einbau im Airbagmodul oben liegt, schwächer gekrümmt ist als der Rand 2b, der den Gassack unten begrenzt.

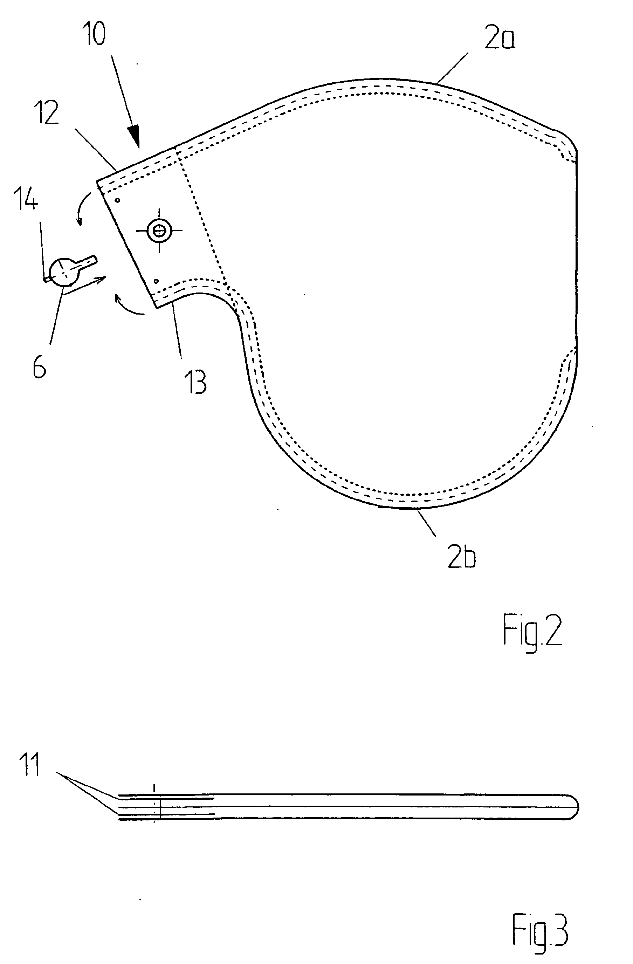

Zur Herstellung des Gassacks wird der Gassackzuschnitt nach Fig. 1 an der Symmetrielinie 1 geklappt und die deckungsgleichen Bereiche werden entlang der Ränder 2a, b miteinander vernäht. Der fertige Gassack weist nun einen Einblasmund 10 auf, der an einer Seite für die spätere Diffusormontage offen bleibt. Zur Verstärkung des Einblasmundes können Gewebeeinlagen 11 (Fig. 3) beim Vernähen der dekkungsgleichen Bereiche entlang der Ränder 2a, b eingefügt werden, die zu den Öffnungen 7 bis 9 identische Durchbrüche aufweisen. Die Gewebeeinlagen liegen beim Nähen zunächst außen und nach dem Wenden des Gassacks innen, wie es in Fig. 3 dargestellt ist.

Zur Montage des Diffusors 6 im Einblasmund 10 wird dieser senkrecht zur Zeichnungsebene geweitet und der Diffusor eingeschoben. Anschließend werden die Bereiche 12, 13 des Einblasmundes 10 in Pfeilrichtung umgeschlagen und die Öffnungen 9 über Gewindezapfen 14 des Diffusors gestreift. Danach kann der nicht dargestellte Gasgenerator durch die Öffnung 7 in den Diffusor eingeschoben werden und der Gassack mittels bekannter Befestigungsmittel über die Öffnungen 7, 8 an den Stirnseiten des Diffusors fixiert werden.

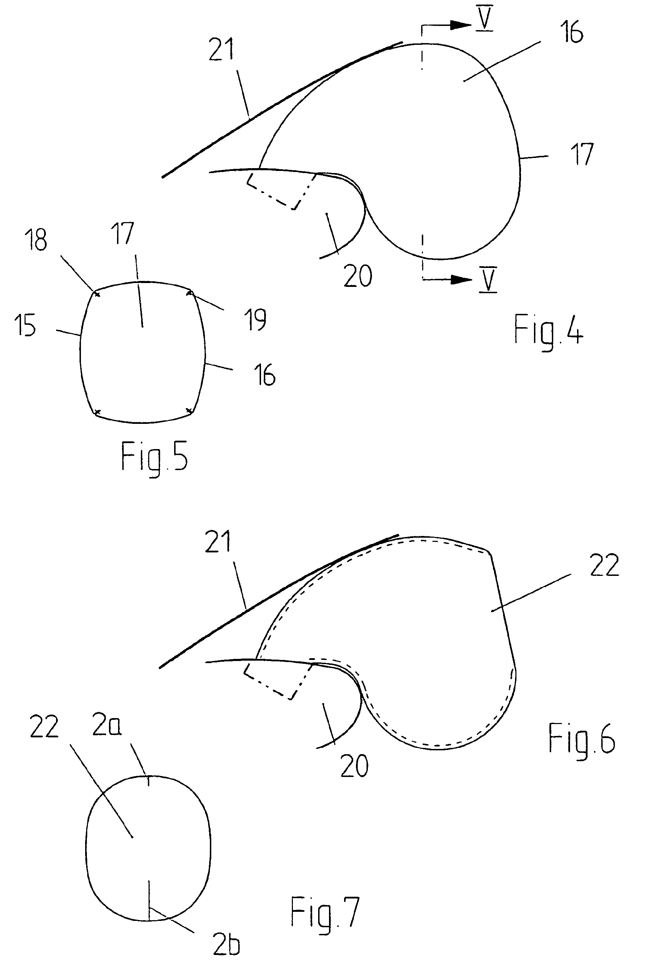

In der Fig. 4 ist die Entfaltungscharakteristik eines bekannten dreidimensionalen Gassacks dargestellt. Bei diesem sind zwei Seitenteile 15, 16 mit einem umlaufenden Mittelteil 17 durch Nähte 18, 19 verbunden (Fig. 5). Die Nähte liegen bei diesem Gassack seitlich des Mittelteils, so daß der Bereich des Mittelteils, auf den der Insasse im Crashfall aufprallt, nahtfrei ist. Der Gassack ist in einer "top-mounted"-Einbaulage in einer Armaturentafel 20 angeordnet und entfaltet sich zwischen dieser und der Windschutzscheibe 21.

Der gleiche positive Effekt wird auch mit dem erfindungsgemäß geschnittenen und angeordneten Gassack mit geringerem Aufwand erzielt. Bei diesem verlaufen die Nähte der Ränder 2a, 2b in der Mitte des Gassacks vom nahtlosen Bereich 22 ausgehend vom Insassen weg. So wird bei dieser erfindungsgemäßen Anordnung ebenfalls erreicht, daß der Insasse auf den nahtlosen Bereich des Gassacks auftrifft, obwohl die Nähte in der Mitte des Gassacks verlaufen.

## Patentansprüche

1. Airbagmodul, insbesondere Beifahrerairbagmodul, mit einem Gassack, wobei
a) der Gassack aus einem einzigen ebenen Zuschnitt hergestellt ist, der beidseitig einer Symmetrielinie je einen Gassackabschnitt gleicher Form und Größe aufweist,
b) der Gassack eine Aufnahme für einen Diffusor aufweist,
c) der Gassack im Airbagmodul so angeordnet ist, daß die Verbindungsnaht der Ränder der Gassackabschnitte nach Entfaltung des Gassacks im Crashfall entlang einer zumindest annähernd senkrechten Ebene, ausgehend von einem nahtlosen Bereich des Gassacks, vom Insassen weg verläuft,
**dadurch gekennzeichnet,**
**daß** der in seiner Länge durch die Symmetrielinie (1) bestimmte nahtlose Bereich des Gassacks dem Insassen zugekehrt ist, daß der Gassack entlang der Symmetrielinie (1) nur einmal gefaltet ist und sich jedem Gassackabschnitt (2, 3) ein weiterer Abschnitt (4, 5) zur Bildung einer Aufnahme eines Diffusors (6) anschließt und daß die Verbindungsnaht (2a, 2b) der Ränder nach Entfaltung des Gassacks in dessen Mitte verläuft.

2. Airbagmodul nach Anspruch 1, **dadurch gekennzeichnet, daß** ein Diffusor (6), der einen Rohrgasgenerator umgibt, so angeordnet ist, daß seine Längsachse senkrecht bezüglich der Ebene verläuft, in der der Gassack bei der Herstellung ausgebreitet ist.

3. Airbagmodul nach Anspruch 1 oder 2, **dadurch gekennzeichnet, daß** der Abschnitt (10) zur Bildung einer Aufnahme für den Diffusor in dem in eingebauter Lage oben liegenden Bereich des Gassacks vorgesehen ist.

4. Airbagmodul nach mindestens einem der vorhergehenden Ansprüche, **dadurch gekennzeichnet, daß** die Ränder (2a, 2b) des Gassacks bogenförmig verlaufen.

5. Airbagmodul nach mindestens einem der vorhergehenden Ansprüche, **dadurch gekennzeichnet, daß** ein Rand (2a) der nach dem Einbau im Airbagmodul oben liegt, schwächer gekrümmt ist als ein Rand (2b), der den Gassack unten begrenzt.

## Claims

1. Airbag module, in particular front-passenger airbag module, having an airbag,
a) the airbag being produced from a single, flat blank which has an airbag section of identical shape and size on both sides of a line of symmetry,
b) the airbag having a holder for a diffuser,
c) the airbag being arranged in the airbag module in such a manner that, after the airbag has unfolded following a crash, the seam connecting the edges of the airbag sections runs away from the occupant along an at least approximately vertical plane, starting from a seamless region of the airbag,
**characterized in that** the seamless region of the airbag, whose length is determined by the line of symmetry (1), faces the occupant, **in that** the airbag is only folded once along the line of symmetry (1), and a further section (4, 5) adjoins each airbag section (2, 3) so as to form a holder for a diffuser (6), and **in that** after the airbag has unfolded the seam (2a, 2b) connecting the edges runs in its center.

2. Airbag module according to Claim 1, **characterized in that** a diffuser (6), which surrounds a tubular gas generator, is arranged in such a manner that its longitudinal axis runs perpendicularly with respect to the plane in which the airbag has been deployed during production.

3. Airbag module according to Claim 1 or 2, **characterized in that** the section (10) for forming a holder for the diffuser is provided **in that** region of the airbag which is situated at the top in the installed position.

4. Airbag module according to at least one of the preceding claims, **characterized in that** the edges (2a, 2b) of the airbag run in a curved shape.

5. Airbag module according to at least one of the preceding claims, **characterized in that** an edge (2a), which is situated at the top after installation in the airbag module, has a lesser curvature than an edge (2b) bordering the airbag at the bottom.

## Revendications

1. Module d'airbag, en particulier module d'airbag de passager, avec un sac de gaz, dans lequel :
a) le sac de gaz est fabriqué à partir d'une section plane unique qui présente des deux côtés d'une ligne de symétrie respectivement un tronçon de sac de gaz de mêmes forme et dimension,
b) le sac de gaz présente un logement pour un diffuseur,
c) le sac de gaz est disposé dans le module d'airbag de telle sorte que la couture de liaison des bords des tronçons du sac de gaz, après déploiement du sac de gaz en cas de collision, s'étend le long d'un plan au moins approximativement perpendiculaire en partant d'une zone sans couture du sac de gaz, en éloignement des passagers,
**caractérisé**
**en ce que** la zone sans couture du sac de gaz, déterminée dans sa longueur par la ligne de symétrie (1), est dirigée vers les occupants du véhicule, de telle sorte que le sac de gaz n'est plié qu'une seule fois le long de la ligne de symétrie (1) et qu'à chaque tronçon de sac de gaz (2, 3) un autre tronçon (4, 5) est raccordé pour la formation d'un logement d'un diffuseur (6), et en ce que la couture de liaison (2a, 2b) des bords s'étend après déploiement du sac de gaz dans son milieu.

2. Module d'airbag selon la revendication 1, **caractérisé en ce qu'**un diffuseur (6), qui entoure un générateur de gaz tubulaire, est disposé de telle sorte que son axe longitudinal s'étend perpendiculairement par rapport au plan dans lequel le sac de gaz est déployé lors de la fabrication.

3. Module d'airbag selon la revendication 1 ou 2, **caractérisé en ce que** le tronçon (10) pour la formation d'un logement destiné au diffuseur est prévu dans la zone située dans la partie supérieure du sac de gaz dans la position incorporée.

4. Module d'airbag selon au moins l'une des revendications précédentes, **caractérisé en ce que** les bords (2a, 2b) du sac de gaz s'étendent en forme d'arc.

5. Module d'airbag selon au moins l'une des revendications précédentes, **caractérisé en ce qu'**un bord (2a), qui se situe après le montage dans la partie supérieure du module d'airbag, est courbé plus faiblement qu'un bord (2b) qui délimite, dans la partie inférieure, le sac de gaz.
